# EUROPÄISCHE PATENTSCHRIFT

(11) **EP 1 832 773 B1**
(45) Veröffentlichungstag und Bekanntmachung des Hinweises auf die Patenterteilung: **07.05.2014**
(21) Anmeldenummer: 07103302.1
(22) Anmeldetag: 01.03.2007
(51) Int. Cl.: F16H 63/30, F16D 23/06

(54) **Getriebeschaltstelle zum Herstellen einer drehfesten Verbindung zwischen mindestens einem Zahnrad und einer Welle**
Gear switching device for creating a torque proof connection between at least one gear wheel and a shaft
Dispositif de changement de vitesse destiné à faire un lien solidaire entre au moins une roue dentée et un arbre

(30) Priorität: 07.03.2006 DE 102006010356; 21.06.2006 DE 102006028479
(43) Veröffentlichungstag der Anmeldung: 12.09.2007
(73) Patentinhaber: Deere & Company, Moline, IL 61265-8098 (US)
(72) Erfinder: Tarasinski Dr., Nicolai, 67227 Frankenthal (DE)
(74) Vertreter: Magin, Ludwig Bernhard

(56) Entgegenhaltungen:
- WO-A1-2005/005869
- WO-A1-2005/026570
- WO-A1-2005/090108
- DE-A1- 10 040 207
- DE-B- 1 107 460
- DE-C- 855 948
- FR-A1- 2 583 489
- FR-A1- 2 660 040
- FR-A1- 2 875 183

## Beschreibung

Die Erfindung betrifft eine Getriebeschaltstelle zum Herstellen einer drehfesten Verbindung zwischen mindestens einem Zahnrad und einer Welle. Die Getriebeschaltstelle umfasst eine Welle, eine Schaltmuffe und zwei Zahnräder. Die zwei Zahnräder sind jeweils drehbar relativ zur Welle gelagert. Die Schaltmuffe ist auf der Welle verdrehsicher gelagert. Die Schaltmuffe und die Zahnräder sind derart ausgebildet, dass zwischen der Schaltmuffe und jeweils einem Zahnrad eine formschlüssige drehfeste Verbindung herstellbar ist. Die Schaltmuffe wirkt derart mit den zwei Zahnrädern zusammen, dass stets zumindest eine formschlüssige drehfeste Verbindung in einer eingerückten Stellung zwischen der Schaltmuffe und einem der Zahnräder hergestellt ist.

Aus dem Stand der Technik sind mehrere stufenlose Getriebe bekannt, die zum Erzielen eines ausreichenden Verstellbereichs aus einer Kombination von einem stufenlosen Variator und einem Schaltgetriebe bestehen und bei denen die Schaltelemente bei annähernd synchroner Drehzahl geschaltet werden. Hierbei werden die Getriebe einerseits mittels kraftschlüssiger Kupplungselemente (Lamellenkupplungen) und andererseits mittels formschlüssiger Kupplungselemente (Klauenkupplungen) geschaltet. Bei diesen Getrieben weisen alle Schaltstellen zusätzlich zur eingerückten bzw. gekuppelten Stellung auch noch eine ausgerückte bzw. ungekuppelte Stellung auf (Neutral), in der kein Drehmoment über die Schaltstelle übertragen wird. Alle Getriebe verwenden zum Betätigen der Kupplungselemente hydraulische Systeme, welche beispielsweise durch mitrotierende Ringzylinder realisiert sind, wobei das Öl zur Betätigung über Drehdurchführungen zugeführt wird.

Bei Getrieben mit drehzahlsynchronen Schaltstellen ist es zum Erreichen eines ruckfreien Betriebs besonders wichtig, dass der Schaltvorgang zum richtigen/geeigneten Zeitpunkt erfolgt und dabei weder eine Unterbrechung des Kraftflusses auftritt (Schaltloch), noch eine Verblockung des Getriebes, bei der beide Schaltelemente der Synchronschaltstelle gleichzeitig betätigt sind.

Die im Stand der Technik verwendeten hydraulischen Aktuatoren einer Getriebeschaltstelle haben Schaltzeiten in der Größenordnung von 100 ms und mehr. Zudem sind die Schaltzeiten vom Öldruck, der Öltemperatur und der Ölviskosität abhängig und im Falle der rotierenden Zylinder auch von der Drehzahl des Zylinders. Mit anderen Worten variieren also die Schaltzeiten einer aus dem Stand der Technik bekannten Getriebeschaltstelle. Daneben verändern sich die Schaltzeiten unvorhersehbar, wenn ein Kupplungszylinder zwischen zwei kurz aufeinander folgenden Schaltungen seine Endlagen nicht erreichen kann.

Die WO 2005/005869 A1 zeigt ein Getriebe mit mehreren Übersetzungen, mehreren Schaltstellen zum Wechsel der Übersetzungen und einer Kontrolleinheit, um die durch das übertragene Drehmoment verursachten Deformationen in dem Getriebe über zumindest ein statisches Bauteil zu erfassen. Die Kontrolleinheit kann das Drehmoment anpassen in Abhängigkeit der erfassten Deformationen.

Der vorliegenden Erfindung liegt daher die Aufgabe zugrunde, eine Getriebeschaltstelle der eingangs genannten Art anzugeben und weiterzubilden, durch welche die vorgenannten Probleme überwunden werden. Insbesondere soll eine Getriebeschaltstelle angegeben und weiterentwickelt werden, bei welcher die Eigenschaften hinsichtlich des Schaltlochs bzw. einer Verblockung des Getriebes verbessert ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Getriebeschaltstelle der eingangs genannten Art dadurch gekennzeichnet, dass die Schaltmuffe eine Ankerplatte aufweist, die drehbar zur Schaltmuffe in einer in der Schaltmuffe vorgesehenen Nut in axialer Richtung entlang einer Strecke von 1 bis 10 cm Länge frei beweglich zwischen einem linken und rechten Anschlag gelagert ist, wobei die Ankerplatte mittels zweier Elektromagnete entlang der Nut derart beschleunigbar ist, dass sich auf den linken oder rechten Anschlag ein Kraftstoß ausüben lässt, durch den die Schaltmuffe in die andere eingerückte Stellung verbracht wird.

Falls eine formschlüssige drehfeste Verbindung zwischen der Schaltmuffe und einem Zahnrad vorliegt, wird dieser Zustand im Folgenden auch als eingerückter Zustand bezeichnet.

Erfindungsgemäß ist zunächst erkannt worden, dass die erfindungsgemäße Getriebeschaltstelle prinzipbedingt kein Schaltloch aufweist, da die Getriebeschaltstelle keine Neutralstellung und somit keine Unterbrechung des Kraftflusses zwischen der Welle und zumindest einem Zahnrad aufweist. Dies wird insbesondere durch die mechanische Ausgestaltung der einzelnen Komponenten - nämlich der Schaltmuffe und den zwei Zahnrädern - der Getriebeschaltstelle realisiert sowie durch deren Anordnung auf der Welle. Da die erfindungsgemäße Getriebeschaltstelle keine Neutralstellung aufweist, kann ein Schaltvorgang nur dann durchgeführt werden, wenn die Schaltmuffe und das mit der Schaltmuffe in Eingriff zu bringende Zahnrad im Wesentlichen die gleiche Drehzahl aufweisen, das heißt synchron relativ zueinander drehen. In ganz besonders vorteilhafter Weise kann daher die erfindungsgemäße Getriebeschaltstelle in einem Doppelvariatorgetriebe oder in einem Getriebe zum Einsatz kommen, welches beispielsweise aus der WO 2005/090108 A1 oder der zum Anmeldetag der hier vorliegenden Patentanmeldung noch nicht offen gelegten DE 10 2005 044 180.7 bekannt sind. Da die erfindungsgemäße Getriebeschaltstelle insbesondere in den Getriebeanordnungen der beiden letztgenannten Patentanmeldungen verwendet werden können, wird der gesamte Offenbarungsgehalt dieser beiden Patentanmeldungen hier mit einbezogen. Somit kann Synchronität an der Getriebeschaltstelle dadurch hergestellt werden, dass beispielsweise ein mit dem einen Zahnrad kämmender Getriebezweig durch einen Verbrennungsmotor antreibbar ist und ein mit dem zweiten Zahnrad kämmender Getriebezweig durch einen Variator bzw. eine elektrische Maschine antreibbar ist. Falls nun eine drehfeste Verbindung zwischen dem ersten Zahnrad und der Welle hergestellt ist und eine Umschaltung zu einer drehfesten Verbindung zwischen Schaltmuffe und dem zweiten Zahnrad erfolgen soll, wäre der Variator des zweiten Getriebezweigs derart zu betreiben, dass zwischen der Schaltmuffe und dem zweiten Zahnrad Synchronität vorliegt. In diesem Betriebszustand ist es dann möglich, die Schaltmuffe von ihrer drehfesten Verbindung mit dem ersten Zahnrad zu einer drehfesten Verbindung mit dem zweiten Zahnrad zu verbringen, wobei während des Umschaltvorgangs auf Grund der Ausgestaltung der Getriebeschaltstelle - es ist stets mindestens eine formschlüssige drehfeste Verbindung zwischen Schaltmuffe und einem der Zahnräder hergestellt - eine drehfeste Verbindung zwischen der Welle und sowohl erstem als auch zweitem Zahnrad vorliegt. In diesem Zustand ist ein Drehmomentfluss zwischen dem ersten Getriebezweig und dem ersten Zahnrad auf die Welle einerseits und ein Drehmomentfluss zwischen dem zweiten Getriebezweig und dem zweiten Zahnrad auf die Welle andererseits gleichzeitig möglich. Wenn die Schaltmuffe sich lediglich in einem eingerückten Zustand mit dem zweiten Zahnrad befindet, liegt lediglich einen Drehmomentfluss zwischen dem zweiten Getriebezweig und der Welle vor. Mit anderen Worten kann mit der erfindungsgemäßen Getriebeschaltstelle in ganz besonders vorteilhafter Weise in diesem Ausführungsbeispiel zwischen den zwei Getriebezweigen umgeschaltet werden, ohne dass eine Unterbrechung des Kraftflusses erfolgt.

In einer ganz besonders bevorzugten Ausführungsform ist die Schaltmuffe räumlich zwischen den zwei Zahnrädern angeordnet. Hierbei könnten die zwei Zahnräder an einer vorgebbaren und im Wesentlichen unveränderlichen Längsposition der Welle jeweils drehbar relativ zur Welle angeordnet sein. Die auf der Welle verdrehsicher gelagerte Schaltmuffe könnte derart an der Welle angeordnet sein, dass sie in Längsrichtung der Welle in einen eingerückten Zustand mit dem einen und/oder dem anderen Zahnrad verbracht werden kann.

Ganz besonders bevorzugt ist vorgesehen, dass die Schaltmuffe und die zwei Zahnräder derart angeordnet und ausgebildet, dass zumindest ein Betriebszustand vorgesehen ist, bei welchem eine drehfeste formschlüssige Verbindung zwischen der Schaltmuffe und den zwei Zahnrädern vorliegt. Wie bereits angedeutet, ist in diesem Betriebszustand gleichzeitig ein Drehmomentfluss zwischen den zwei Zahnrädern und der Welle realisiert, also beispielsweise zwischen den zwei Getriebezweigen, die jeweils mit einem der zwei Zahnräder kämmen und der Welle. Die Welle könnte beispielsweise als Abtriebswelle eines Antriebsstrangs eines Traktors genutzt werden, mit welcher letztendlich mindestens ein Rad des Traktors antreibbar ist.

Besonders bevorzugt weist die Schaltmuffe eine Kupplungsverzahnung auf, welche in eine an einem Zahnrad vorgesehene Kupplungsverzahnung zum Herstellen einer formschlüssigen Verbindung eingreifen kann.

Ganz besonders bevorzugt weist die Schaltmuffe zwei Kupplungsverzahnungen auf. Jedes der zwei Zahnräder weist eine Kupplungsverzahnung auf. Die Kupplungsverzahnungen sind derart ausgebildet, dass zwischen den Kupplungsverzahnungen der Schaltmuffe und einem Zahnrad stets ein Eingriff mit einer Überdeckung vorliegt. Die Schaltmuffe könnte beispielsweise an ihrer (bezogen auf die Längsachse der Welle) linken Seite eine Kupplungsverzahnung und an ihrer rechten Seite eine weitere Kupplungsverzahnung aufweisen. Die linke Kupplungsverzahnung der Schaltmuffe könnte in eine Kupplungsverzahnung eines Zahnrads eingreifen, wobei dieses Zahnrad links von der Schaltmuffe angeordnet ist. Die rechte Kupplungsverzahnung der Schaltmuffe könnte in eine Kupplungsverzahnung eines Zahnrads eingreifen, welches rechts von der Schaltmuffe angeordnet ist. Damit die soeben beschriebenen Kupplungsverzahnungen stets einen Eingriff mit einer Überdeckung aufweisen, ist der äußere Abstand zwischen der linken Kupplungsverzahnung der Schaltmuffe und der rechten Kupplungsverzahnung der Schaltmuffe in Längsrichtung der Welle größer als der innere Abstand zwischen der Kupplungsverzahnung des linken Zahnrads und der Kupplungsverzahnung des rechten Zahnrads.

Eine Kupplungsverzahnung eines Zahnrads bzw. der Schaltmuffe könnte axiale oder radiale Klauen aufweisen, d.h. dass die Klauen sich im Wesentlichen in axialer oder in radialer Richtung bezogen zur Längsachse der Welle erstrecken.

Im Konkreten könnte eine Kupplungsverzahnung spitz oder mit einem flachen Dach ausgeführt sein. Alternativ oder zusätzlich könnte eine Kupplungsverzahnung hinterstoßen oder abweisend ausgeführt sein. Falls die Kupplungsverzahnungen hinterstoßen ausgebildet sind, ist eine stark verringerte oder keine Betätigungskraft auf die Schaltmuffe nach dem Schaltvorgang auszuüben, um den Schaltvorgang abzuschließen. Falls die Kupplungsverzahnungen abweisend ausgeführt sind, ist nach einem erfolgten Schaltvorgang zum Aufrechterhalten eines eingerückten Schaltzustands eine Betätigungskraft auf die Schaltmuffe aufrechtzuerhalten.

Eine reibungsarme Bewegung der Schaltmuffe relativ zur Welle kann dann erzielt werden, wenn die Schaltmuffe mittels Wälzkörpern auf der Welle gelagert und somit in axialer Richtung der Welle leichtgängig verschiebbar angeordnet ist. Dies kann beispielsweise durch zwischen der Welle und der Schaltmuffe vorgesehene Kugeln erzielt werden.

In einer ganz besonders bevorzugten Ausführungsform weist die Schaltmuffe eine Ankerplatte auf oder ist mit einer Ankerplatte verbunden. Mittels dieser Ankerplatte ist die Schaltmuffe betätigbar. Die Ankerplatte könnte im Wesentlichen konzentrisch zur Welle und/oder verdrehbar zur Schaltmuffe angeordnet sein. Falls die Ankerplatte an der Schaltmuffe befestigt oder einteilig mit der Schaltmuffe ausgebildet ist, rotiert die Ankerplatte gleichsam mit der Schaltmuffe und der Welle. In diesem Fall ist es zweckmäßig, die Ankerplatte kreisscheibenförmig auszubilden und daher konzentrisch zur Welle bzw. Schaltmuffe anzuordnen. Falls die Ankerplatte verdrehbar zur Schaltmuffe ausgebildet ist, könnte an der Schaltmuffe eine Nut vorgesehen sein, in welcher ein Teil der Ankerplatte eingreift. Falls daher die Ankerplatte in axialer Richtung der Welle bewegt wird, wird hierdurch auch die Schaltmuffe in axialer Richtung bewegt, da die Ankerplatte mit einem der Schaltmuffe zugewandten Teil in die Nut der Schaltmuffe eingreift bzw. zur Anlage kommt.

Besonders bevorzugt ist die Ankerplatte relativ zur Schaltmuffe in axialer Richtung (und somit auch relativ zur Welle) bewegbar angeordnet. Hierbei könnte es sich um eine Strecke von 1 bis 10 cm Länge handeln, über welche die Ankerplatte relativ zur Schaltmuffe in axialer Richtung frei bewegbar angeordnet ist. Gegebenenfalls könnte die Ankerplatte mit einer Vorspannkraft in eine vorgebbare Position drängbar sein. Dies könnte mit einer entsprechend dimensionierten und angeordneten Feder erfolgen. Durch die relativbewegliche Anordnung der Ankerplatte zur Schaltmuffe kann erreicht werden, dass die Ankerplatte zunächst über einen Teil des Schaltweges beschleunigbar ist, ohne dass hierbei die Schaltmuffe in axialer Richtung bewegt bzw. mitgenommen wird. Sobald die Ankerplatte auf einen an der Schaltmuffe vorgesehenen Anschlag auftrifft, wird durch den hierdurch verursachten Kraftstoß eine eventuell vorliegende Losbrechkraft der Schaltmuffe schnell und wirkungsvoll überwunden. Die axiale Beweglichkeit der Ankerplatte relativ zur Schaltmuffe könnte beispielsweise mit Hilfe von an der Schaltmuffe vorgesehenen Anschlägen begrenzt werden.

Nun könnte vorgesehen sein, dass die Schaltmuffe mittels der Ankerplatte mechanisch oder hydraulisch betätigbar ist. So könnte beispielsweise die Ankerplatte allein mittels einer mechanischen Hebelarmanordnung betätigbar sein, wobei allerdings entsprechende Vorkehrungen (z.B. Herstellen der Synchronität zwischen Schaltmuffe und einzurückendem Zahnrad) zu treffen sind, dass die Getriebeschaltstelle rein mechanisch betätigbar ist. Alternativ oder zusätzlich könnte mittels eines hydraulischen Aktuators die Ankerplatte und somit die Schaltmuffe betätigt bzw. bewegt werden. Auch hierbei wäre zunächst sicherzustellen, dass Synchronität zwischen der Schaltmuffe und einem einzurückenden Zahnrad vorliegt, bevor eine Steuereinheit einen Schaltbefehl an ein entsprechend vorgesehenes Hydraulikventil absetzt, so dass ein hydraulischer Aktuator (beispielsweise ein in axialer Richtung der Welle bewegbar angeordneter Ringkolben) mit unter Druck stehender Hydraulikflüssigkeit beaufschlagt werden kann, wodurch der Schaltvorgang durchgeführt wird.

In einer ganz besonders bevorzugten Ausführungsform ist die Schaltmuffe mittels der Ankerplatte mit mindestens einem Elektromagneten betätigbar. So könnte bei einer Aktivierung eines Elektromagneten die Ankerplatte von einem von dem aktivierten Elektromagneten erzeugten Magnetfeld angezogen oder abgestoßen werden. Falls die Ankerplatte ein ferromagnetisches Material aufweist, beispielsweise Eisen oder Stahl, wird die Ankerplatte von dem Magnetfeld des Elektromagneten angezogen werden. Alternativ hierzu könnte die Ankerplatte ein Material aufweisen, das eine Abstoßungskraft zwischen dem Elektromagneten und der Ankerplatte hervorruft, beispielsweise ein permanentmagnetisches Material.

In einer kostengünstigen Ausführungsform könnte lediglich ein Elektromagnet vorgesehen sein, mit welchem die Ankerplatte bzw. die Schaltmuffe entgegen einer Vorspannkraft bewegbar ist. Demgemäß spannt die beispielsweise durch eine entsprechend dimensionierte und angeordnete Feder bereitgestellte Vorspannkraft die Ankerplatte beziehungsweise die Schaltmuffe in eine erste eingerückte Position vor. Bei Aktivierung des Elektromagneten wird entgegen der Vorspannkraft die Ankerplatte beziehungsweise die Schaltmuffe in die zweite eingerückte Position bewegt. Dementsprechend ist der Elektromagnet bzw. dessen Spule und der durch die Spule fließende elektrische Strom derart auszulegen, dass jedenfalls die Vorspannkraft überwunden werden kann, so dass die Schaltmuffe in die zweite eingerückte Position verbracht werden kann.

In einer ganz besonders bevorzugten Ausführungsform sind zwei Elektromagneten vorgesehen, mit welchen die Ankerplatte bzw. die Schaltmuffe zwischen den eingerückten Schaltzuständen der Getriebeschaltstelle bewegbar ist. Somit kann ein Schaltvorgang der Getriebeschaltstelle bzw. der Schaltmuffe dadurch durchgeführt werden, dass der gegebenenfalls aktivierte erste Elektromagnet deaktiviert und der zweite deaktivierte Elektromagnet aktiviert wird. In diesem Fall ist mittels einer Steuereinheit und einer entsprechend vorgesehenen Leistungselektronik die Spule des einen Elektromagneten nicht mehr und die Spule des anderen Elektromagneten mit einem elektrischen Strom zu beaufschlagen, kann also die Getriebeschaltstelle durch ein elektrisches Umschalten betätigt werden. Auch bei einer Anordnung mit zwei Elektromagneten könnte eine Vorspannung der Schaltmuffe vorgesehen sein, so dass bei Ausfall der Steuereinheit ein vorgegebener Schaltzustand der Getriebeschaltstelle vorliegt.

Der Elektromagnet könnte einen radialen Topfmagneten aufweisen. Alternativ oder zusätzlich könnte der Elektromagnet in einem Getriebegehäuse befestigt angeordnet sein. Wenn der Elektromagnet in dem Getriebegehäuse befestigt ist und in seinem aktivierten Betriebszustand die Ankerplatte anzieht, kommt die Ankerplatte an dem Elektromagnet bzw. an seinem Kern zur Anlage. Dementsprechend muss die Ankerplatte drehbar relativ zur Schaltmuffe angeordnet sein, so dass bei in diesem Betriebszustand fixierter Ankerplatte die Schaltmuffe sowie die Welle dennoch rotieren können.

Der Elektromagnet könnte an der Welle befestigt angeordnet sein und/oder mindestens ein Elektromagnet könnte in die Schaltmuffe integriert sein. Bei dieser Ausgestaltung rotiert der Elektromagnet mit der Welle bzw. der Schaltmuffe mit. In diesem Fall könnte der Elektromagnet mittels Schleifkontakten mit elektrischer Energie versorgt werden.

In einer ganz besonders bevorzugten Ausführungsform weist die erfindungsgemäße Getriebeschaltstelle eine Steuereinheit auf. Mit dieser Steuereinheit ist ein Schaltvorgang der Schaltmuffe ansteuerbar. Somit könnte - wie bereits angedeutet - der hydraulischer Aktuator oder der mindestens eine Elektromagnet von der Steuereinheit angesteuert werden.

Insbesondere zum Herstellen einer Synchronität zwischen der Schaltmuffe und einem Zahnrad, welches mit der Schaltmuffe in Eingriff zu bringen ist, könnte mindestens ein Drehzahlsensor vorgesehen sein. Mit diesem Drehzahlsensor könnte mittelbar oder unmittelbar die Drehzahl eines der zwei Zahnräder ermittelt werden. Dementsprechend ist der Drehzahlsensor an einer geeigneten Stelle anzuordnen, vorzugsweise in einem Bereich nahe des Zahnrads, damit ihm die Drehzahl dieses Zahnrads unmittelbar bestimmt werden kann. Der Drehzahlsensor könnte allerdings auch derart angeordnet und ausgebildet sein, dass er die Drehzahl eines anderen rotierenden Bauteils - beispielsweise eine Welle eines mit dem Zahnrad drehbar verbundenen Getriebezweigs - mittelbar detektiert. Ganz besonders bevorzugt sind zwei Drehzahlsensoren vorgesehen, mit welchen jeweils die Drehzahl eines Zahnrads unmittelbar detektiert werden kann.

Die Steuereinheit könnte derart programmiert sein, dass anhand der Drehzahlinformation des mindestens einen Drehzahlsensors ein geeigneter oder ein günstiger Zeitpunkt für einen Schaltvorgang der Getriebeschaltstelle ermittelbar ist. Ein solch geeigneter Zeitpunkt liegt insbesondere dann vor, wenn die Drehzahl- oder die Drehmomentverhältnisse günstig für einen Schaltvorgang sind. Ein solcher Drehzahlsensor könnte beispielsweise einen Hall-Sensor aufweisen, welcher ein elektrisches Signal erzeugt und einer Steuereinheit zuleitet. Anhand des elektrischen Signals des Drehzahlsensors könnte die Drehzahl des rotierenden Bauteiles in der Steuereinheit ermittelt werden.

Ganz besonders bevorzugt ist mindestens ein Mittel vorgesehen, mit welchem die Stromstärke messbar ist, mit welcher der mindestens eine Elektromagnet beaufschlagbar ist. Hierdurch kann einerseits verifiziert werden, dass dieser Elektromagnet aktiviert ist. Andererseits kann durch Kenntnis der Stromstärke des durch diesen Elektromagneten fließenden Stroms und der Eigenschaften des Elektromagneten (Geometrie des Kerns und der Spule sowie die Anzahl der Wicklungen in der Spule) auf die Stärke des von dem Elektromagneten erzeugten magnetischen Felds geschlossen werden. Dementsprechend kann berührungslos auf die momentane Betätigungskraft der Ankerplatte bzw. der Schaltmuffe geschlossen werden.

Bevorzugt ist mindestens ein Sensor vorgesehen, mit welchem die magnetische Feldstärke oder die magnetische Flussdichte in einem Bereich nahe des Elektromagneten oder der Ankerplatte oder an einer sonstigen geeigneten Stelle detektierbar ist. Ein solcher Sensor könnte an einem Getriebegehäuse fixiert sein. Mit Hilfe eines solchen Sensors kann die momentane Position der Ankerplatte bzw. der Schaltmuffe ermittelt werden, so dass einer Steuereinrichtung der Getriebeschaltstelle eine entsprechende Rückmeldung zur Verfügung gestellt werden kann, ob nämlich ein bestimmter kommandierter Zustand der Getriebeschaltstelle auch tatsächlich eingenommen wurde bzw. vorliegt oder nicht.

Die auf die Ankerplatte ausgeübte Betätigungskraft sollte zumindest derart ausgelegt sein, dass eine Betätigung der Schaltmuffe auch bei einem maximalen Kraftfluss zwischen einem Zahnrad und der Welle möglich ist. Dies ist insbesondere dann erforderlich, wenn die an der Schaltmuffe und den Zahnrädern vorgesehene Kupplungsverzahnung hinterstoßen ausgeführt ist und zum Lösen einer formschlüssigen drehfesten Verbindung zwischen einem Zahnrad und der Schaltmuffe eine entsprechende Betätigungskraft aufzubringen ist.

In einer ganz besonders bevorzugten Ausführungsform wird der Elektromagnet mit Hilfe einer Steuervorrichtung bzw. mit einem Verfahren zum Ansteuern eines Aktuators gemäß einem der Ansprüche der zum Anmeldezeitpunkt dieser Patentanmeldung noch nicht veröffentlichten DE 10 2005 039 263 angesteuert. Im Folgenden wird auf die Steuervorrichtung bzw. auf das Verfahren zum Ansteuern eines Aktuators auf die DE 10 2005 039 263 Bezug genommen. Daher wird der gesamte Offenbarungsgehalt dieser Patentanmeldung hier einbezogen. Dies ist für die Fälle vorgesehen, in welchen der Elektromagnet mindestens eine Spule und gegebenenfalls einen Kern aufweist.

Wenn die Ankerplatte beziehungsweise die Schaltmuffe in einen Zustand verbracht werden soll, in welchem sie gegen eine Vorspannkraft oder gegen eine oben angedeutete Betätigungskraft zu bewegen ist, wird die Spule des Elektromagneten mit einem elektrischen Strom einer vorgebbaren ersten Stromstärke beaufschlagt. Diese erste Stromstärke ist derart bemessen, dass die vom Magnetfeld des Elektromagneten auf die Ankerplatte wirkende Kraft derart hoch ist, dass jedenfalls die Bewegung der Ankerplatte zusammen mit der Schaltmuffe gegen die Vorspannkraft bzw. Betätigungskraft durchführbar ist.

Zum Halten der Ankerplatte in dem Zustand, in welchem die Schaltmuffe gegen die Vorspannkraft zu bewegen war und in welchem die Ankerplatte z.B. an dem Kern des Elektromagneten anliegt, wird die Spule des Elektromagneten mit einem elektrischen Strom einer vorgebbaren zweiten Stromstärke beaufschlagt, wobei die zweite Stromstärke kleiner als die erste Stromstärke ist. Die Ankerplatte wird von dem Magnetfeld des Elektromagneten angezogen. Da die Ankerplatte in diesem Zustand näher an dem Elektromagneten angeordnet ist, ist es auch ausreichend, die Ankerplatte in dieser Stellung mit dem elektrischen Strom der zweiten Stromstärke in der Spule des Elektromagneten zu halten, da bei einem geringen Abstand der Ankerplatte vom Elektromagneten (d.h. bei einem kleinen bzw. nahezu keinem Luftspalt) das Magnetfeld dennoch groß genug ist (wegen einer reziproken Abhängigkeit der magnetischen Feldstärke als Funktion des Abstands zum Elektromagneten), auch wenn der hierfür erforderliche Haltestrom lediglich ein Bruchteil - beispielsweise ein 1/5 bis ein 1/6 - des elektrischen Stroms der ersten Stromstärke ist, der zum Bewegen der Ankerplatte und der Schaltmuffe eingestellt wird. Daher ist vorgesehen, dass eine Spule jeweils mit elektrischem Strom der ersten oder der zweiten vorgebbaren Stromstärke im Sinn der DE 10 2005 039 263 beaufschlagt wird.

Obwohl der gesamte Offenbarungsgehalt der DE 10 2005 039 263 hier mit einbezogen wird, sei ganz besonders darauf hingewiesen, dass der Strom, mit dem der Elektromagnet beaufschlagt wird, gepulst sein kann und insbesondere pulsweitenmoduliert ist. Hierdurch ist in ganz besonders vorteilhafter Weise der Energiebedarf zum Halten des Ankerteils in der Stellung, in welcher z.B. eine Vorspannkraft zu überwinden oder eine Haltekraft aufzuwenden ist, sehr gering.

Besonders bevorzugt ist ein Elektromagnet mit einer Spannung von mindestens 90 V beaufschlagbar. Hiermit kann in vorteilhafter Weise eine kurze Schaltzeit erzielt werden, wobei hierzu auch eine entsprechende Ausgestaltung der Kupplungsverzahnungen und ein entsprechend schnelles Zusammenwirken zwischen Schaltmuffe und den zwei Zahnrädern vorauszusetzen ist.

Die für einen Schaltvorgang erforderliche Energie könnte aus einem Energiespeicher entnommen werden. Ein solcher Energiespeicher könnte beispielsweise einen elektrischen Kondensator oder eine Batterie aufweisen und einen hohen elektrischen Stromfluss pro Zeiteinheit zur Verfügung stellen.

Zusammenfassend kann festgehalten werden, dass mit einer für den jeweiligen Anwendungsfall geeignet ausgebildeten erfindungsgemäßen Getriebeschaltstelle in ganz besonders vorteilhafter Weise Schaltzeiten von unterhalb 5 ms erzielt werden können. Diese Schaltzeiten sind weder von der Betriebstemperatur der Komponenten der Getriebeschaltstelle noch von deren Drehzahl in nennenswerter Weise beeinflusst. Somit kann die Zeit, in der das Getriebe verblock ist, gegenüber den aus dem Stand der Technik bekannten Getriebeschaltstellen deutlich reduziert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen erläutert. In der Zeichnung zeigen jeweils in einer schematischen Darstellung
- Fig. 1: ein Ausführungsbeispiel einer Getriebeschaltstelle,
- Fig. 2: ein Ausführungsbeispiel einer Getriebeschaltstelle, welche hydraulisch betätigbar ausgeführt ist,
- Fig. 3: ein Ausführungsbeispiel einer Getriebeschaltstelle, welche elektromagnetisch betätigbar ausgeführt ist,
- Fig. 4: ein viertes Ausführungsbeispiel einer erfindungsgemäßen Getriebeschaltstelle, welche elektromagnetisch betätigbar ausgeführt ist,
- Fig. 5: ein Ausführungsbeispiel einer Getriebeschaltstelle, welche elektromagnetisch betätigbar ausgeführt ist,

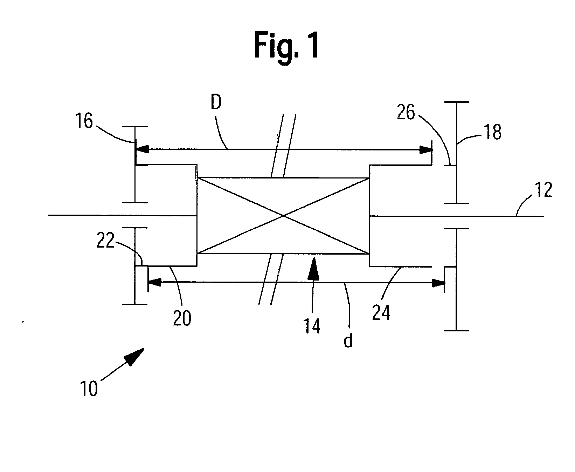

In den Figuren sind gleiche oder ähnliche Bauteile mit denselben Bezugszeichen gekennzeichnet. Fig. 1 zeigt in einer schematischen Darstellung eine Getriebeschaltstelle 10. Die Getriebeschaltstelle 10 umfasst eine Welle 12, welche beispielsweise als Abtriebswelle eines Antriebsstrangs in einem in Fig. 1 nicht gezeigten Traktor verwendet wird und somit gegebenenfalls über ein Differentialgetriebe die Räder einer Achse des Traktors antreibt. Die Getriebeschaltstelle 10 umfasst des Weiteren eine Schaltmuffe 14, welche verdrehsicher auf der Welle 12 angeordnet ist. Die Schaltmuffe 14 kann in Längsrichtung der Welle 12 relativ zur Welle 12 bewegt werden. Links neben der Schaltmuffe 14 ist ein erstes Zahnrad 16 drehbar auf der Welle 12 gelagert. Rechts neben der Schaltmuffe 14 ist ein zweites Zahnrad 18 drehbar auf der Welle 12 gelagert. Somit ist die Schaltmuffe 14 zwischen den zwei Zahnrädern 16, 18 auf der Welle 12 angeordnet.

Die Schaltmuffe 14 weist auf der linken Seite eine Kupplungsverzahnung 20 auf, welche axiale Klauen (nicht gezeigt) aufweist. Das linke Zahnrad 16 weist seinerseits eine Kupplungsverzahnung 22 auf, wobei die Kupplungsverzahnung 22 ebenfalls axiale Klauen (nicht gezeigt) aufweist und im Wesentlichen komplementär zur Kupplungsverzahnung 20 der Schaltmuffe 14 ausgebildet ist. In dem in Fig. 1 gezeigten Zustand der Getriebeschaltstelle 12 befindet sich die Schaltmuffe 14 in Eingriff mit dem Zahnrad 16. Dementsprechend liegt auf Grund einer verdrehsicheren Lagerung der Schaltmuffe 14 auf der Welle 12 eine drehfeste Verbindung zwischen dem ersten Zahnrad 16 und der Welle 12 vor. Die Schaltmuffe 14 weist auf der rechten Seite eine Kupplungsverzahnung 24 auf, welche axiale Klauen (nicht gezeigt) aufweist. Das rechte Zahnrad 18 weist seinerseits eine Kupplungsverzahnung 26 auf, wobei die Kupplungsverzahnung 26 ebenfalls axiale Klauen (nicht gezeigt) aufweist und im Wesentlichen komplementär zur Kupplungsverzahnung 24 der Schaltmuffe 14 ausgebildet ist.

Die Getriebeschaltstelle 10 ist derart ausgebildet, dass die Schaltmuffe 14 mit den zwei Zahnrädern 16, 18 derart zusammenwirkt, dass stets eine formschlüssige drehfeste Verbindung zwischen der Schaltmuffe 14 und einem der zwei Zahnräder 16, 18 hergestellt ist. Dies wird gemäß dem Ausführungsbeispiel aus Fig. 1 dadurch erreicht, dass bezüglich der Längsrichtung der Welle 12 der Abstand zwischen dem linken äußeren Ende der Kupplungsverzahnung 20 und dem rechten äußeren Ende der Kupplungsverzahnung 24 der Schaltmuffe 14 - in Fig. 1 mit D gekennzeichnet - größer als der Abstand zwischen dem der Schaltmuffe 14 zugewandten äußeren Ende der Kupplungsverzahnung 22 des ersten Zahnrads und dem der Schaltmuffe 14 zugewandten äußeren Ende der Kupplungsverzahnung 26 des Zahnrads 18 - in Fig. 1 mit d gekennzeichnet - ist. Mit anderen Worten weist die Schaltmuffe 14 mit ihren beiden Kupplungsverzahnungen 20, 24 entlang der Längsrichtung der Welle 12 eine größere räumliche Ausdehnung auf, als zwischen den inneren Enden der beiden Kupplungsverzahnungen 22, 26 der beiden Zahnräder 16, 18 zur Verfügung stehen würde, falls die Kupplungsverzahnungen 20 bis 26 keinen klauenförmigen Eingriff erlauben würden. Somit sind stets mindestens zwei Kupplungsverzahnungen miteinander im Eingriff, beispielsweise in dem Betriebszustand der Getriebeschaltstelle 10 gemäß Fig. 1 die Kupplungsverzahnungen 20, 22. Falls die Schaltmuffe 14 aus Fig. 1 in ihren rechten eingerückten Zustand verbracht wird, gibt es einen bestimmten Bereich (welcher von der geometrischen Ausgestaltung der Getriebeschaltstelle 10 abhängig ist, da der Abstand D größer als der Abstand d ist) Positionen der Schaltmuffe 14, bei welchen sowohl die linke Kupplungsverzahnung 20 der Schaltmuffe 14 mit der Kupplungsverzahnung 22 des Zahnrads 16 als auch die rechte Kupplungsverzahnung 24 der Schaltmuffe 14 mit der Kupplungsverzahnung 26 des Zahnrads 18 in Eingriff steht. Wenn also die Schaltmuffe 14 diese Positionen temporär oder permanent einnimmt, stehen die Kupplungsverzahnungen 20 bis 26 in einem Eingriff mit einer Überdeckung.

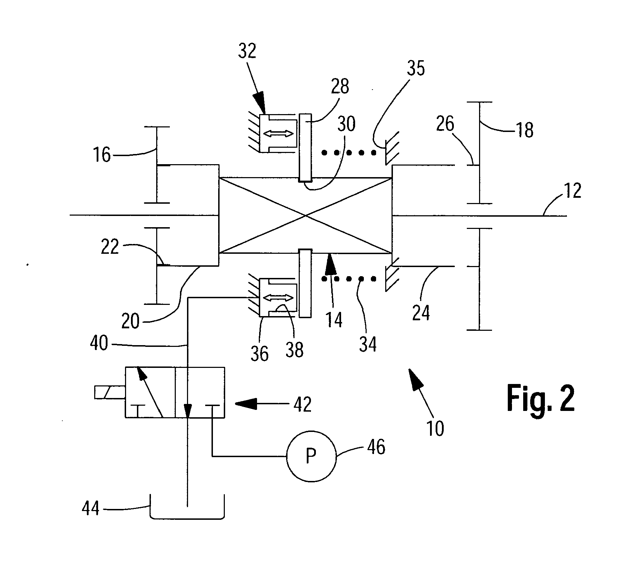

Fig. 2 zeigt ein weiteres Ausführungsbeispiel einer Getriebeschaltstelle 10. Sowohl die Schaltmuffe 14 als auch die Welle 12 bzw. die zwei Zahnräder 16, 18 sind vergleichbar zu der Getriebeschaltstelle 10 aus Fig. 1 ausgebildet bzw. relativ zueinander angeordnet. Die Schaltmuffe 14 aus Fig. 2 weist eine Schaltgabel bzw. Ankerplatte 28 auf, welche kreisscheibeförmig ausgebildet und konzentrisch sowohl zur Schaltmuffe 14 als auch zur Welle 12 angeordnet ist. Die Ankerplatte 28 ist drehbar zur Schaltmuffe 14 in der in der Schaltmuffe 14 vorgesehenen Nut 30 gelagert. Da die Nut 30 im Wesentlichen die gleiche Breite wie die Ankerplatte 28 aufweist, kann die Ankerplatte 28 in axialer Richtung relativ zur Schaltmuffe 14 nahezu nicht bewegt werden.

Auf der linken Seite der Ankerplatte 28 ist eine Ringkolbenanordnung 32 vorgesehen, mit welcher die Ankerplatte 28 entgegen die von der Feder 34 erzeugten Vorspannkraft aus der in Fig. 2 gezeigten Position nach rechts bewegt werden kann. Die Feder 34 ist auf der rechten Seite der Ankerplatte 28 an einem Gehäuseteil 35 abgestürzt und kommt mit ihrem linken Ende an der Ankerplatte 28 zur Anlage. Die Ringkolbenanordnung 32 umfasst ein Ringkolbengehäuse 36 sowie ein darin in Längsrichtung der Welle 12 bewegbar angeordneten Ringkolben 38. Das Ringkolbengehäuse 36 ist über die Hydraulikleitung 40 mit einem 2-Positionen-3-Wegeventil 42 mit einem Hydrauliktank 44 oder einer Hydraulikpumpe 46 verbindbar, je nachdem in welcher Stellung das Ventil 42 sich befindet. Falls das Ventil 42 sich in seiner rechten Stellung befindet, steht die Ringkolbenanordnung 32 mit der Hydraulikpumpe 46 in Verbindung, so dass unter Druck stehende Hydraulikflüssigkeit den Ringkolben 38 nach rechts bewegt. Hierdurch wird die Ankerplatte 28 und die Schaltmuffe 14 ebenfalls nach rechts bewegt, so dass letztendlich eine drehfeste Verbindung zwischen der Schaltmuffe 14 und dem zweiten Zahnrad 18 hergestellt werden kann.

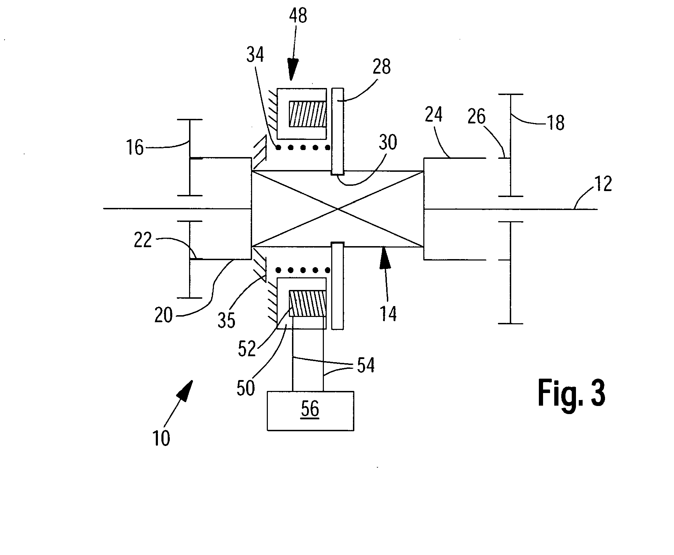

In den Ausführungsbeispielen gemäß den Fig. 3 bis 5 ist die Getriebeschaltstelle 10 elektromagnetisch betätigbar. In dem Ausführungsbeispiel gemäß Fig. 3 ist ein Elektromagnet 48 vorgesehen, welcher einen Kern 50 und eine Spule 52 aufweist. Der Elektromagnet 48 ist in Form eines ringförmigen Topfmagneten ausgebildet und ist an einem in Fig. 3 nicht gezeigten Getriebegehäuse befestigt. Die Spule 52 des Elektromagneten 48 steht über die elektrischen Leitungen 54 mit der Steuereinheit 56 in Verbindung. Mit Hilfe der Steuereinheit 56 ist die Spule 52 des Elektromagneten 48 mit elektrischem Strom beaufschlagbar, wobei der Einfachheit halber in Fig. 3 weder eine Strom- bzw. Spannungsquelle noch eine Leistungselektronikbaugruppe zur Stromversorgung der Spule 52 des Elektromagneten 48 gezeigt ist. Auch bei der Getriebeschaltstelle 10 aus Fig. 3 ist eine Feder 34 vorgesehen, welche mit ihrem linken Ende an einem Getriebegehäuseteil 35 und mit ihrem rechten Ende an der Ankerplatte 28 zur Anlage kommt. Somit ist die Schaltmuffe 14 samt Ankerplatte 28 zu einem eingerückten Zustand zwischen Schaltmuffe 14 und dem zweiten Zahnrad 18 vorgespannt. In dem in Fig. 3 gezeigten Betriebszustand der Getriebeschaltstelle 10 ist der Elektromagnet 48 aktiviert, so dass auf Grund des von dem Elektromagneten 48 erzeugten Magnetfelds die Ankerplatte 28 zu dem Elektromagneten 48 angezogen wird und dementsprechend entgegen der durch die Feder 34 erzeugte Vorspannkraft in die linke eingerückte Schaltstellung verbracht ist. In diesem Betriebszustand liegt zwischen dem Zahnrad 16 und der Welle 12 über die Schaltmuffe 14 eine drehfeste Verbindung vor bzw. erfolgt eine Drehmomentübertragung zwischen der Welle 12 und dem Zahnrad 16. Wenn der Elektromagnet 48 deaktiviert wird, wird auf Grund der Vorspannkraft der Feder 34 die Schaltmuffe samt Ankerplatte 28 wieder in den rechten eingerückten Zustand verbracht.

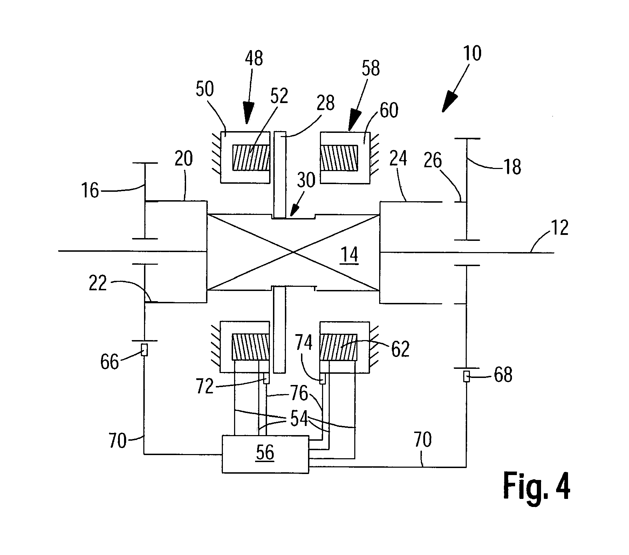

Das in Fig. 4 gezeigte Ausführungsbeispiel einer erfindungsgemäßen Getriebeschaltstelle 10 weist im Vergleich zu dem aus Fig. 3 keine Feder 34 auf. Es ist vielmehr ein zweiter Elektromagnet 58 vorgesehen, der ebenfalls einen Kern 60 und eine Spule 62 aufweist. Auch die Spule 62 ist über elektrische Leitungen 54 mit der Steuereinheit 56 verbunden. Der Elektromagnet 58 ist rechts neben der Ankerplatte 28 angeordnet, so dass die Ankerplatte 28 zwischen den zwei Elektromagneten 48, 58 angeordnet ist. Je nachdem welcher der beiden Elektromagneten 48, 58 aktiviert ist, befindet sich bzw. wird die Schaltmuffe 14 nebst Ankerplatte 28 nach links oder nach rechts bewegt, so dass eine drehfeste Verbindung entweder mit dem ersten Zahnrad 16 und/oder dem zweiten Zahnrad 18 herstellbar ist. Die in Fig. 3 vorgesehene Nut 30 der Schaltmuffe 14 ist in Längsrichtung der Welle 12 länger ausgeführt, als dies in den Fig. 1 bis 3 der Fall ist. Hierdurch kann bei einem Umschaltvorgang erreicht werden, dass die Ankerplatte zunächst über einen Teil des Schaltweges beschleunigt wird, ohne hierbei die Schaltmuffe 14 in axialer Richtung zu bewegen. Sobald die Ankerplatte 28 in der Nut 30 an den rechten oder linken Anschlag auftrifft, wird durch den hierdurch verursachten Kraftstoß beziehungsweise über die hierdurch erfolgte Impulsübertragung die Schaltmuffe 14 entsprechend beschleunigt und in die andere eingerückte Stellung verbracht. Somit kann in ganz besonders vorteilhafter Weise eine eventuell vorliegende Losbrechkraft der Schaltmuffe 14 an einem der zwei Zahnräder 16, 18 überwunden werden. Weiterhin kann auf Grund der relativ leichten Masse der Ankerplatte 28 diese sehr wirksam beschleunigt werden, so dass die im Allgemeinen eine größere Masse aufweisende Schaltmuffe 14 über den Kraftstoß sehr wirksam beschleunigbar ist. Somit kann in ganz besonders vorteilhafter Weise eine kurze Umschaltzeit der Getriebeschaltstelle 10 erzielt werden, die kleiner als 5 ms sein kann.

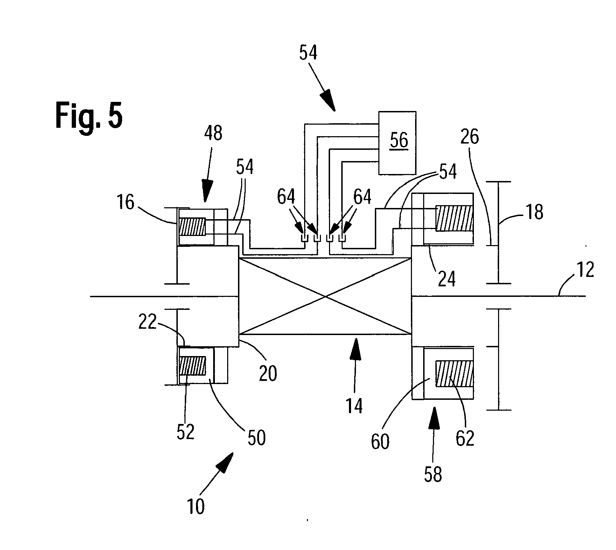

Fig. 5 zeigt ein zu der Getriebeschaltstelle 10 aus Fig. 1 vergleichbar ausgebildeten Getriebeschaltstelle 10, welche ebenfalls mit zwei Elektromagneten 48, 58 betätigbar ist. Allerdings sind die zwei Elektromagneten 48, 58 drehfest an der Schaltmuffe 14 angeordnet, im Konkreten nämlich an den Kupplungsverzahnungen 20, 24 der Schaltmuffe 14. Sobald also einer der beiden Elektromagneten 48, 58 aktiviert ist, baut dieser ein entsprechendes Magnetfeld auf und zieht sich hierdurch an das diesem Elektromagnet gegenüberliegende Zahnrad 16 bzw. 18 heran, so dass auch die Schaltmuffe 14 in Richtung des jeweiligen Zahnrads 16 bzw. 18 bewegt wird. Die elektrische Versorgung der zwei Elektromagneten 48, 58 erfolgt ebenfalls über elektrische Leitungen 54 von der Steuereinheit 56, wobei jedoch - lediglich schematisch angedeutet - Schleifkontakte 64 vorgesehen sind, mit welchen der elektrische Strom über die sich mit der Welle 12 drehenden Schaltmuffe 14 nebst den zwei Elektromagneten 48, 58 auf die gehäusefest angeordneten Leitungsabschnitte übertragen werden kann. Bei dem Ausführungsbeispiel aus Fig. 5 ist somit keine Ankerplatte bzw. Schaltgabel erforderlich.

Die zwei Zahnräder 16, 18 sind in den Fig. 1 bis 5 mittels nicht eingezeichneter Wälzlager drehbar zur Welle 12 gelagert. In vergleichbarer Weise könnte die Ankerplatte 28 gemäß den Fig. 2 bis 4 mittels Wälzlager relativdrehbar zur Schaltmuffe 14 gelagert sein.

Zum Ermitteln der jeweiligen Drehzahl des Zahnrads 16 bzw. 18 ist jeweils ein Drehzahlsensor 66 bzw. 68 vorgesehen. Die Drehzahlsensoren 66, 68 erzeugen ein elektrisches Signal, welches abhängig von der aktuell vorliegenden Drehzahl des jeweiligen Zahnrads 16, 18 ist. Dieses elektrische Signal wird über die elektrischen Leitungen 70 der Steuereinheit 56 zugeführt. Anhand der elektrischen Signale kann die Steuereinheit 56 ermitteln, welche Drehzahlen das jeweilige Zahnrad 16, 18 aufweist. Weiterhin sind zwei Magnetfeldsensoren 72, 74 vorgesehen, mit welchen die Stärke des jeweils vorliegenden Magnetfelds detektierbar ist, welches durch den Elektromagneten 48 bzw. 58 erzeugt wird, falls dieser Elektromagnet 48, 58 aktiviert ist. Auch die Magnetfeldsensoren 72, 74 erzeugen elektrische Signale, welche abhängig von der Magnetfeldstärke des jeweiligen Elektromagneten 48, 58 sind. Somit kann durch Detektion des Magnetfelds von der Steuereinheit 56 ermittelt werden, in welcher Position sich die Ankerplatte 28 befindet. Weiterhin ist mit Hilfe der Steuereinheit 56 die Stromstärke des durch die Spule 52 und/oder 62 fließenden elektrischen Stroms mit einer in den Fig. nicht gezeigten, jedoch der Steuereinheit 56 einverleibten Strommesseinrichtung detektierbar. Da bei Kenntnis der durch einen Elektromagneten 48, 58 fließenden Stromstärke auf die Magnetfeldstärke des jeweiligen Elektromagneten 48, 58 geschlossen werden kann, und diese Magnetfeldstärke unter anderem auch von der Position der Ankerplatte abhängt, kann durch die Detektion sowohl der Magnetfeldstärke als auch der Stromstärke des durch die Spule 52 bzw. 62 fließenden elektrischen Stroms in ganz besonders vorteilhafter Weise eine berührungslose Auswertung der Ankerplattenposition realisiert werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Getriebeschaltstelle zum Herstellen einer drehfesten Verbindung zwischen mindestens einem Zahnrad (16, 18) und einer Welle (12), mit einer Welle (12), einer Schaltmuffe (14) und zwei Zahnrädern (16, 18), wobei die zwei Zahnräder (16, 18) jeweils drehbar relativ zur Welle (12) gelagert sind, wobei die Schaltmuffe (14) auf der Welle (12) verdrehsicher gelagert ist, wobei die Schaltmuffe (14) und die Zahnräder (16, 18) derart ausgebildet sind, dass zwischen der Schaltmuffe (14) und jeweils einem Zahnrad (16, 18) eine formschlüssige drehfeste Verbindung herstellbar ist, und wobei die Schaltmuffe (14) derart mit den zwei Zahnrädern (16, 18) zusammenwirkt, dass stets zumindest eine formschlüssige drehfeste Verbindung in einer eingerückten Stellung zwischen der Schaltmuffe (14) und einem der Zahnräder (16, 18) hergestellt ist, **dadurch gekennzeichnet, dass** die Schaltmuffe (14) eine Ankerplatte (28) aufweist, die drehbar zur Schaltmuffe (14) in einer in der Schaltmuffe (14) vorgesehenen Nut (30) in axialer Richtung entlang einer Strecke von 1 bis 10 cm Länge frei beweglich zwischen einem linken und rechten Anschlag gelagert ist, wobei die Ankerplatte (28) mittels zweier Elektromagnete (48, 58) entlang der Nut (30) derart beschleunigbar ist, dass sich auf den linken oder rechten Anschlag ein Kraftstoß ausüben lässt, durch den die Schaltmuffe (14) in die andere eingerückte Stellung verbracht wird.

2. Getriebeschaltstelle nach Anspruch 1, **dadurch gekennzeichnet, dass** die Schaltmuffe (14) zwischen den zwei Zahnrädern (16, 18) angeordnet ist.

3. Getriebeschaltstelle nach Anspruch 1 oder 2, **dadurch gekennzeichnet, dass** die Schaltmuffe (14) und die zwei Zahnräder (16, 18) derart angeordnet und ausgebildet sind, dass zumindest ein Betriebszustand vorgesehen ist, bei welchem eine drehfeste formschlüssige Verbindung zwischen der Schaltmuffe (14) und den zwei Zahnrädern (16, 18) vorliegt.

4. Getriebeschaltstelle nach einem der Ansprüche 1 bis 3, **dadurch gekennzeichnet, dass** die Schaltmuffe (14) eine Kupplungsverzahnung (20, 24) aufweist, welche in eine an einem Zahnrad (16, 18) vorgesehene Kupplungsverzahnung (22, 26) zum Herstellen einer formschlüssigen Verbindung eingreifen kann.

5. Getriebeschaltstelle nach Anspruch 4, **dadurch gekennzeichnet, dass** die Schaltmuffe (14) zwei Kupplungsverzahnungen (20, 24) aufweist, dass jedes der zwei Zahnräder (16, 18) eine Kupplungsverzahnung (22, 26) aufweist und dass die Kupplungsverzahnungen (20 bis 26) derart ausgebildet sind, dass zwischen den Kupplungsverzahnungen (20, 24) der Schaltmuffe (14) und einem Zahnrad (16, 18) stets ein Eingriff mit Überdeckung vorliegt.

6. Getriebeschaltstelle nach Anspruch 4 oder 5, **dadurch gekennzeichnet, dass** eine Kupplungsverzahnung (20 bis 26) axiale oder radiale Klauen aufweist oder dass eine Kupplungsverzahnung (20 bis 26) spitz oder mit einem flachen Dach ausgeführt ist oder dass eine Kupplungsverzahnung (20 bis 26) hinterstoßen oder abweisend ausgeführt ist.

7. Getriebeschaltstelle nach einem der Ansprüche 1 bis 6, **dadurch gekennzeichnet, dass** die Schaltmuffe (14) mittels Wälzkörpern - insbesondere mittels Kugeln - auf der Welle (12) gelagert und somit in axialer Richtung der Welle (12) verschiebbar angeordnet ist.

8. Getriebeschaltstelle nach einem der Ansprüche 1 bis 7, **dadurch gekennzeichnet, dass** die Schaltmuffe (14) eine Ankerplatte (28) aufweist oder mit einer Ankerplatte verbunden ist, dass die Schaltmuffe (14) mittels der Ankerplatte (28) betätigbar ist und dass die Ankerplatte (28) vorzugsweise im Wesentlichen konzentrisch zur Welle (12) und/oder verdrehbar zur Schaltmuffe (14) angeordnet ist.

9. Getriebeschaltstelle nach Anspruch 8, **dadurch gekennzeichnet, dass** die Ankerplatte (28) relativ zur Schaltmuffe (14) in axialer Richtung bewegbar angeordnet ist und dass vorzugsweise die Ankerplatte (28) mit einer Vorspannkraft in eine vorgebbare Position drängbar ist.

10. Getriebeschaltstelle nach Anspruch 8 oder 9, **dadurch gekennzeichnet, dass** die Schaltmuffe (14) mittels der Ankerplatte (28) mechanisch oder hydraulisch betätigbar ist.

11. Getriebeschaltstelle nach Anspruch 8 oder 9, **dadurch gekennzeichnet, dass** die Schaltmuffe (14) mittels der Ankerplatte (28) mit mindestens einem Elektromagneten (48, 58) betätigbar ist, vorzugsweise derart, dass bei einer Aktivierung eines Elektromagneten (48, 58) die Ankerplatte (28) von dem aktivierten Elektromagneten (48, 58) angezogen wird.

12. Getriebeschaltstelle nach Anspruch 11, **dadurch gekennzeichnet, dass** ein Elektromagnet (48) vorgesehen ist, mit welchem die Ankerplatte (28) entgegen einer Vorspannkraft bewegbar ist, oder dass zwei Elektromagneten (48, 58) vorgesehen sind, mit welchen die Ankerplatte (28) zwischen den eingerückten Schaltzuständen der Schaltmuffe (14) bewegbar ist.

13. Getriebeschaltstelle nach Anspruch 11 oder 12, **dadurch gekennzeichnet, dass** der Elektromagnet (48, 58) einen radialen Topfmagneten aufweist und/oder dass der Elektromagnet (48, 58) in einem Getriebegehäuse befestigt angeordnet ist.

14. Getriebeschaltstelle nach Anspruch 11 oder 12, **dadurch gekennzeichnet, dass** der Elektromagnet (48, 58) an der Welle (12) befestigt angeordnet ist und/oder dass mindestens ein Elektromagnet (48, 58) in die Schaltmuffe (14) integriert ist und dass der Elektromagnet (48, 58) bevorzugt mittels Schleifkontakten (64) mit elektrischer Energie versorgbar ist.

15. Getriebeschaltstelle nach einem der Ansprüche 1 bis 14, **gekennzeichnet durch** eine Steuereinheit (56), mit welcher ein Schaltvorgang der Schaltmuffe (14) ansteuerbar ist, wobei vorzugsweise mit der Steuereinheit (56) mindestens ein Elektromagnet (48, 58) ansteuerbar ist.

16. Getriebeschaltstelle nach Anspruch 15, **dadurch gekennzeichnet, dass** mindestens ein Drehzahlsensor (66, 68) vorgesehen ist, mit welchem die Drehzahl eines der zwei Zahnräder (16, 18) unmittelbar oder mittelbar ermittelbar ist, und dass vorzugsweise die Steuereinheit (56) derart programmiert ist, dass anhand der Drehzahlinformation des mindestens einen Drehzahlsensors (66, 68) ein geeigneter Zeitpunkt für einen Schaltvorgang der Getriebeschaltstelle (10) ermittelbar ist, bei welchem beispielsweise die Drehzahl- oder Drehmomentverhältnisse günstig für einen Schaltvorgang sind.

17. Getriebeschaltstelle nach Anspruch 15 oder 16, **dadurch gekennzeichnet, dass** mindestens ein Mittel (56) vorgesehen ist, mit welchem die Stromstärke messbar ist, mit welcher der mindestens eine Elektromagnet (48, 58) beaufschlagbar ist, und/oder dass mindestens ein Sensor (72, 74) vorgesehen ist, mit welchem die magnetische Feldstärke oder die magnetische Flussdichte in einem Bereich nahe des Elektromagneten (48, 58) oder der Ankerplatte (28) detektierbar ist.

18. Getriebeschaltstelle nach einem der Ansprüche 8 bis 17, **dadurch gekennzeichnet, dass** die auf die Ankerplatte (28) ausgeübte Betätigungskraft derart ausgelegt ist, dass eine Betätigung der Schaltmuffe (14) auch bei einem maximalen Kraftfluss zwischen einem Zahnrad (16, 18) und der Welle (12) möglich ist.

19. Getriebeschaltstelle nach einem der Ansprüche 11 bis 18, **dadurch gekennzeichnet, dass** ein Elektromagnet (48, 58) mit einer Spannung von mindestens 90 V beaufschlagbar ist und/oder dass die für einen Schaltvorgang erforderliche Energie aus einem Energiespeicher entnehmbar ist, vorzugsweise aus einem elektrischen Kondensator.

## Claims

1. Gear switching device for making a torque-proof connection between at least one gearwheel (16, 18) and a shaft (12), with a shaft (12), with a shift sleeve (14) and with two gearwheels (16, 18), the two gearwheels (16, 18), being in each case mounted rotatably in relation to the shaft (12), the shift sleeve (14) being mounted fixedly in terms of rotation on the shaft (12), the shift sleeve (14) and the gearwheels (16, 18) being designed in such a way that a positive rotationally fixed connection can be made between the shift sleeve (14) and a gearwheel (16, 18) in each case, and the shift sleeve (14) cooperating with the two gearwheels (16, 18) in such a way that always at least one positive rotationally fixed connection is made in an engaged position between the shift sleeve (14) and one of the gearwheels (16, 18), **characterized in that** the shift sleeve (14) has an armature plate (28) which is mounted rotatably in relation to the shift sleeve (14), in a groove (30) provided in the shift sleeve (14), so as to be freely movable in the axial direction along a distance of 1 to 10 cm between a left and a right stop, the armature plate (28) being capable of being accelerated along the groove (30) by means of two electromagnets (48, 58), in such a way that an impulse can be exerted upon the left or the right stop, as a result of which impulse the shift sleeve (14) is brought into the other engaged position.

2. Gear switching device according to Claim 1, **characterized in that** the shift sleeve (14) is arranged between the two gearwheels (16, 18).

3. Gear switching device according to Claim 1 or 2, **characterized in that** the shift sleeve (14) and the two gearwheels (16, 18) are arranged and designed in such a way as to provide at least one operating state in which there is a rotationally fixed positive connection between the shift sleeve (14) and the two gearwheels (16, 18).

4. Gear switching device according to one of Claims 1 to 3, **characterized in that** the shift sleeve (14) has a clutch toothing (20, 24) which can engage into a clutch toothing (22, 26), provided on a gearwheel (16, 18), for making a positive connection.

5. Gear switching device according to Claim 4, **characterized in that** the shift sleeve (14) has two clutch toothings (20, 24), **in that** each of the two gearwheels (16, 18) has a clutch toothing (22, 26), and **in that** the clutch toothings (20 to 26) are designed in such a way that there is always engagement with overlap between the clutch toothings (20, 24) of the shift sleeve (14) and a gearwheel (16, 18).

6. Gear switching device according to Claim 4 or 5, **characterized in that** a clutch toothing (20 to 26) has axial or radial dogs, or **in that** a clutch toothing (20 to 26) is of pointed form or of a form with a flat roof, or **in that** a clutch toothing (20 to 26) is of back-impact or deflecting form.

7. Gear switching device according to one of Claims 1 to 6, **characterized in that** the shift sleeve (14) is mounted on the shaft (12) by means of rolling bodies, in particular by means of balls, and is thus arranged displaceably in the axial direction of the shaft (12).

8. Gear switching device according to one of Claims 1 to 7, **characterized in that** the shift sleeve (14) has an armature plate (28) or is connected to an armature plate, **in that** the shift sleeve (14) can be actuated by means of the armature plate (28), and **in that** the armature plate (28) is arranged preferably essentially concentrically to the shaft (12) and/or rotatably in relation to the shift sleeve (14).

9. Gear switching device according to Claim 8, **characterized in that** the armature plate (28) is arranged moveably in the axial direction in relation to the shift sleeve (14), and **in that** preferably the armature plate (28) can be urged with a prestressing force into a predeterminable position.

10. Gear switching device according to Claim 8 or 9, **characterized in that** the shift sleeve (14) can be actuated mechanically or hydraulically by means of the armature plate (28).

11. Gear switching device according to Claim 8 or 9, **characterized in that** the shift sleeve (14) can be actuated by means of the armature plate (28) by at least one electromagnet (48, 58) preferably in such a way that, when an electromagnet (48, 58) is activated, the armature plate (28) is attracted by the activated electromagnet (48, 58).

12. Gear switching device according to Claim 11, **characterized in that** one electromagnet (48) is provided, by which the armature plate (28) can be moved counter to a prestressing force, or **in that** two electromagnets (48, 58) are provided, by which the armature plate (28) can be moved between the engaged shift states of the shift sleeve (14).

13. Gear switching device according to Claim 11 or 12, **characterized in that** the electromagnet (48, 58) has a radial pot magnet and/or **in that** the electromagnet (48, 58) is arranged so as to be fastened in a gear case.

14. Gear switching device according to Claim 11 or 12, **characterized in that** the electromagnet (48, 58) is arranged so as to be fastened to the shaft (12), and/or in that at least one electromagnet (48, 58) is integrated into the shift sleeve (14), and **in that** the electromagnet (48, 58) can be supplied with electrical energy preferably by means of sliding contacts (64).

15. Gear switching device according to one of Claims 1 to 14, **characterized by** a control unit (56), by means of which a shift action of the shift sleeve (14) can be activated, at least one electromagnet (48, 58) preferably being activatable by means of the control unit (56).

16. Gear switching device according to Claim 15, **characterized in that** at least one rotational-speed sensor (66, 68) is provided, by means of which the rotational speed of one of the two gearwheels (16, 18) can be determined directly or indirectly, and **in that** preferably the control unit (56) is programmed in such a way that, on the basis of the rotational-speed information of the at least one rotational-speed sensor (66, 68), a suitable time point for a shift action of the gear switching device (10) can be determined, at which time point, for example, the rotational-speed or torque conditions are favourable for a shift action.

17. Gear switching device according to Claim 15 or 16, **characterized in that** at least one means (56) is provided, by which the current strength with which the at least one electromagnet (48, 58) can be acted upon can be measured, and/or **in that** at least one sensor (72, 74) is provided, by means of which the magnetic field strength or the magnetic flux density can be detected in a region near the electromagnet (48, 58) or near the armature plate (28).

18. Gear switching device according to one of Claims 8 to 17, **characterized in that** the actuating force exerted upon the armature plate (28) is designed in such a way that actuation of the shift sleeve (14) is possible even in the event of a maximum force flux between a gearwheel (16, 18) and the shaft (12).

19. Gear switching device according to one of Claims 11 to 18, **characterized in that** an electromagnet (48, 58) can be acted upon with a voltage of at least 90 V, and/or **in that** the energy required for a shift action can be taken from an energy accumulator, preferably from an electrical capacitor.

## Revendications

1. Dispositif de changement de vitesse destiné à établir une connexion solidaire en rotation entre au moins une roue dentée (16, 18) et un arbre (12), comprenant un arbre (12), un manchon coulissant (14) et deux roues dentées (16, 18), les deux roues dentées (16, 18) étant chacune supportées à rotation par rapport à l'arbre (12), le manchon coulissant (14) étant monté de manière solidaire en rotation sur l'arbre (12), le manchon coulissant (14) et les roues dentées (16, 18) étant réalisés de telle sorte qu'entre le manchon coulissant (14) et une roue dentée respective (16, 18) puisse s'établir une connexion solidaire en rotation à engagement positif, et le manchon coulissant (14) coopérant avec les deux roues dentées (16, 18) de telle sorte qu'au moins une connexion solidaire en rotation à engagement positif soit toujours établie dans une position embrayée entre le manchon coulissant (14) et l'une des roues dentées (16, 18), **caractérisé en ce que** le manchon coulissant (14) présente une plaque d'armature (28) qui est montée à rotation par rapport au manchon coulissant (14) dans une rainure (30) prévue dans le manchon coulissant (14) de manière librement déplaçable dans la direction axiale le long d'une distance de 1 à 10 cm de long entre une butée gauche et une butée droite, la plaque d'armature (28) pouvant être accélérée au moyen de deux électroaimants (48, 58) le long de la rainure (30) de telle sorte qu'une force d'impact puisse s'exercer sur la butée gauche ou droite, par laquelle le manchon coulissant (14) est déplacé dans l'autre position embrayée.

2. Dispositif de changement de vitesse selon la revendication 1, **caractérisé en ce que** le manchon coulissant (14) est disposé entre les deux roues dentées (16, 18).

3. Dispositif de changement de vitesse selon la revendication 1 ou 2, **caractérisé en ce que** le manchon coulissant (14) et les deux roues dentées (16, 18) sont disposés et réalisés de telle sorte qu'il soit prévu au moins un état de fonctionnement dans lequel une connexion solidaire en rotation à engagement positif s'établit entre le manchon coulissant (14) et les deux roues dentées (16, 18).

4. Dispositif de changement de vitesse selon l'une quelconque des revendications 1 à 3, **caractérisé en ce que** le manchon coulissant (14) présente une denture d'embrayage (20, 24) qui peut venir en prise dans une denture d'embrayage (22, 26) prévue au niveau d'une roue dentée (16, 18) pour établir une connexion par engagement positif.

5. Dispositif de changement de vitesse selon la revendication 4, **caractérisé en ce que** le manchon coulissant (14) présente deux dentures d'embrayage (20, 24), **en ce que** chacune des deux roues dentées (16, 18) présente une denture d'embrayage (22, 26) et **en ce que** les dentures d'embrayage (20 à 26) sont réalisées de telle sorte qu'entre les dentures d'embrayage (20, 24) du manchon coulissant (14) et une roue dentée (16, 18) soit toujours établi un engagement avec recouvrement.

6. Dispositif de changement de vitesse selon la revendication 4 ou 5, **caractérisé en ce qu'**une denture d'embrayage (20 à 26) présente des griffes axiales ou radiales ou **en ce qu'**une denture d'embrayage (20 à 26) est réalisée sous forme pointue ou avec un toit plat, ou **en ce qu'**une denture d'embrayage (20 à 26) est réalisée en contre-dépouille ou avec une déflexion.

7. Dispositif de changement de vitesse selon l'une quelconque des revendications 1 à 6, **caractérisé en ce que** le manchon coulissant (14) est supporté au moyen de corps de roulement - en particulier au moyen de billes - sur l'arbre (12) et est donc disposé de manière à pouvoir coulisser dans la direction axiale de l'arbre (12).

8. Dispositif de changement de vitesse selon l'une quelconque des revendications 1 à 7, **caractérisé en ce que** le manchon coulissant (14) présente une plaque d'armature (28) ou est connecté à une plaque d'armature, **en ce que** le manchon coulissant (14) peut être actionné au moyen de la plaque d'armature (28) et **en ce que** la plaque d'armature (28) est disposée de préférence essentiellement concentriquement par rapport à l'arbre (12) et/ou de manière à pouvoir tourner par rapport au manchon coulissant (14).

9. Dispositif de changement de vitesse selon la revendication 8, **caractérisé en ce que** la plaque d'armature (28) est disposée de manière déplaçable dans la direction axiale par rapport au manchon coulissant (14) et **en ce que** de préférence la plaque d'armature (28) peut être forcée par une force de précontrainte dans une position prédéfinissable.

10. Dispositif de changement de vitesse selon la revendication 8 ou 9, **caractérisé en ce que** le manchon coulissant (14) peut être actionné mécaniquement ou hydrauliquement au moyen de la plaque d'armature (28).

11. Dispositif de changement de vitesse selon la revendication 8 ou 9, **caractérisé en ce que** le manchon coulissant (14) peut être actionné au moyen de la plaque d'armature (28) par au moins un électroaimant (48, 58), de préférence de telle sorte que lors de l'activation d'un électroaimant (48, 58), la plaque d'armature (28) soit attirée par l'électroaimant activé (48, 58).

12. Dispositif de changement de vitesse selon la revendication 11, **caractérisé en ce qu'**un électroaimant (48) est prévu, avec lequel la plaque d'armature (28) peut être déplacée à l'encontre d'une force de précontrainte, ou **en ce que** deux électroaimants (48, 58) sont prévus, avec lesquels la plaque d'armature (28) peut être déplacée entre les états de commutation embrayés du manchon coulissant (14).

13. Dispositif de changement de vitesse selon la revendication 11 ou 12, **caractérisé en ce que** l'électroaimant (48, 58) présente un aimant pot radial et/ou **en ce que** l'électroaimant (48, 58) est disposé de manière fixée dans un boîtier de transmission.

14. Dispositif de changement de vitesse selon la revendication 11 ou 12, **caractérisé en ce que** l'électroaimant (48, 58) est disposé de manière fixée sur l'arbre (12) et/ou **en ce qu'**au moins un électroaimant (48, 58) est intégré dans le manchon coulissant (14) et **en ce que** l'électroaimant (48, 58) peut être alimenté en énergie électrique de préférence au moyen de contacts glissants (64).

15. Dispositif de changement de vitesse selon l'une quelconque des revendications 1 à 14, **caractérisé par** une unité de commande (56) avec laquelle une opération de changement de vitesse du manchon coulissant (14) peut être commandée, au moins un électroaimant (48, 58) pouvant de préférence être commandé avec l'unité de commande (56).

16. Dispositif de changement de vitesse selon la revendication 15, **caractérisé en ce qu'**au moins un capteur de vitesse de rotation (66, 68) est prévu, avec lequel la vitesse de rotation de l'une des deux roues dentées (16, 18) peut être déterminée de manière directe ou indirecte, et **en ce que** de préférence l'unité de commande (56) est programmée de telle sorte qu'à l'aide de l'information de vitesse de rotation de l'au moins un capteur de vitesse de rotation (66, 68), un instant approprié pour une opération de changement de vitesse du dispositif de changement de vitesse (10) puisse être déterminé, auquel instant par exemple les rapports de vitesse de rotation ou de couple sont favorables pour une opération de changement de vitesse.

17. Dispositif de changement de vitesse selon la revendication 15 ou 16, **caractérisé en ce qu'**il est prévu au moins un moyen (56), avec lequel on peut mesurer l'intensité du courant avec laquelle l'au moins un électroaimant (48, 58) peut être sollicité, et/ou **en ce qu'**il est prévu au moins un capteur (72, 74) avec lequel l'intensité de champ magnétique ou la densité de flux magnétique peut être détectée dans une région proche de l'électroaimant (48, 58) ou de la plaque d'armature (28).

18. Dispositif de changement de vitesse selon l'une quelconque des revendications 8 à 17, **caractérisé en ce que** la force d'actionnement exercée sur la plaque d'armature (28) est conçue de telle sorte qu'un actionnement du manchon coulissant (14) soit possible aussi dans le cas d'un flux de force maximum entre une roue dentée (16, 18) et l'arbre (12).

19. Dispositif de changement de vitesse selon l'une quelconque des revendications 11 à 18, **caractérisé en ce qu'**un électroaimant (48, 58) peut être sollicité avec une tension d'au moins 90 V et/ou en ce que l'énergie nécessaire pour une opération de changement de vitesse peut être prélevée d'un accumulateur d'énergie, de préférence d'un condensateur électrique.
